# EUROPEAN PATENT SPECIFICATION

(11) **EP 4 475 532 B1**
(45) Date of publication and mention of the grant of the patent: **01.04.2026**
(21) Application number: 23305884.1
(22) Date of filing: 05.06.2023
(51) Int. Cl.: H04N 21/2343, H04N 21/262, H04N 21/438, H04N 21/845

(54) **METHOD AND CACHE SERVER FOR LIVE VIDEO CONTENT DELIVERY**
VERFAHREN UND CACHE-SERVER ZUR BEREITSTELLUNG VON LIVE-VIDEOINHALTEN
PROCÉDÉ ET SERVEUR DE CACHE POUR DISTRIBUTION DE CONTENU VIDÉO EN DIRECT

(43) Date of publication of application: 11.12.2024
(73) Proprietor: Broadpeak, 35510 Cesson Sevigne (FR)
(72) Inventor: LE SCOUARNEC, Nicolas, 35510 CESSON-SÉVIGNÉ (FR); GAGEOT, Dylan, 35510 CESSON-SÉVIGNÉ (FR); GUERY, Pierre-Jean, 35510 CESSON-SÉVIGNÉ (FR); RICHARD, Vincent, 35510 CESSON-SÉVIGNÉ (FR)
(74) Representative: Cabinet Le Guen Maillet

(56) References cited:
- WO-A1-2013/163448
- WO-A1-2019/011430
- US-A1- 2016 234 536
- US-A1- 2019 373 308

## Description

### TECHNICAL FIELD

At least one embodiment generally relates to a method for delivering a live video content using adaptive streaming. At least one embodiment relates to a cache server configured to implement the method.

### RELATED ART

US 2016/234536 discloses a method to achieve low latency video streaming by including a variety of representations that acts as alternative to each other.

WO 2013/163448 discloses a method for optimizing a presentation of streamed media and allows for efficient concurrent, or timely-distributed, delivery of streamed media data.

US 2019/373308 discloses a method that enables fast tune-in for live streaming services.

WO 2019/011430 discloses a method for operating a media player when receiving a live stream which comprises a sequence of media segments. In particular, a tune-in segment and a tune-in fragment of the livestream is determined at which the media player intends to start consuming the livestream.

Various protocols have been developed to address adaptive live streaming services. HLS (standing for "HTTP Live Streaming", which is a live streaming communications protocol based on HTTP (acronym of "HyperText Transfer Protocol") and developed by Apple Inc.) and DASH (standing for "Dynamic Adaptive Streaming over HTTP", which is a multimedia streaming technology developed by the Moving Picture Experts Group (MPEG)) are examples of such protocols. All these protocols are based on an adaptive transmission concept based on HTTP (HTTP Adaptive Streaming (HAS)).

In live streaming, a video stream is split up in small video segments, which are listed in a playlist/manifest file describing the live video content (e.g., resolution, bit rate, etc) and how it can be accessed. The playlist/manifest and the corresponding video segments are stored on servers. A player is responsible to load the playlist/manifest file from the server(s), load the relevant video segments, and repeat until the video is fully played.

These technologies have been extended to low latency. The low latency version of HLS is named LL-HLS (acronym of "Low Latency HLS"). In LL-HLS, the video segments are further divided into chunks. The low latency version of DASH is named LL-DASH. In LL-DASH, the video segments are further split into smaller chunks (e.g., CMAF chunks (CMAF standing for "Common Media Application Format")), which are then delivered using HTTP chunked transfer encoding (CTE). These low latency technologies thus enable early playback of the live video content by particular chunks management that do not need availability of a full segment before starting playback. In a Content Delivery Network (CDN) deployment for adaptive live streaming, an originating server (also referred to as origin server) is in charge of packaging the live video content in the form of segments of, for example, 6 seconds divided into chunks ready to be sent by a cache server. The chunks correspond to a predefined duration (e.g., 2 seconds) of the live video content and are thus smaller encoded units than the segments.

A client device instructed to play a live video content first sends a request to the cache server in order to get the manifest/playlist associated with that particular live video content. After its reception, the client device parses the playlist/manifest and then starts requesting specific chunks listed in the manifest/playlist. After their reception, the chunks are decoded by the client device and displayed to the end user.

Some video chunks begin with an IDR (acronym of "Instantaneous Decoding Refresh") picture and thus define GOP (acronym of "Group Of Pictures"). Indeed, each GOP begins with the encoding of an IDR picture and comprises the following chunks up to a next IDR picture. Therefore, the first chunk of a GOP (namely the IDR picture) can be decoded without inter prediction.

In case of a live event, Quality of Experience (QoE) is improved when the client device is able to start to playing the live video content as close as possible to the live edge. However, the client device would need to wait for an IDR picture to be able to start playing the live video content. In the case where an IDR picture is provided every 2 seconds then the client device (namely its player) would need to wait up to 2 seconds before being able to start playing, and possibly wait longer due to latency (transmission and buffering delays). Having smaller GOPs (e.g., of 1 second duration instead of 2 seconds), and thus more frequent IDR pictures, makes it possible to decrease the latency but at a cost of an increase in transmission cost. Indeed, more frequent IDR pictures limit efficiency of interframe-based compression and thus decrease overall coding efficiency and increase transmission bitrate for a given visual quality.

There is thus a need for a method for delivering a live video content using adaptive streaming that makes it possible for a client device to join closer to the live edge while limiting encoding resources needs.

### SUMMARY OF THE INVENTION

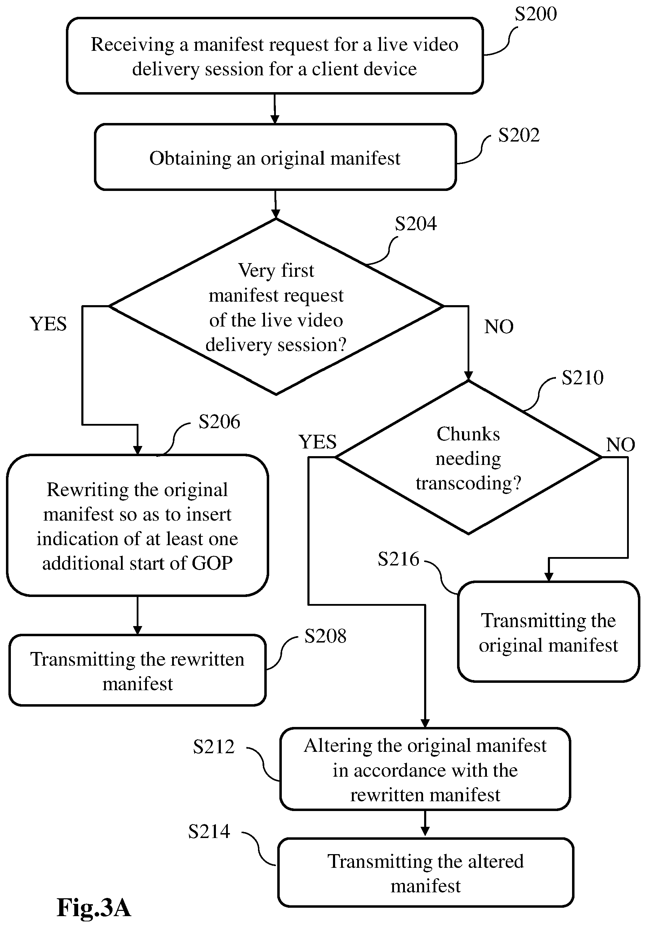

The present invention is as defined by the appended independent claims, which find support in figure 3A and its corresponding part of the description. The remaining embodiments described in the description are to be construed within the limitations of the independent claims.

The present invention relates to a method for delivering a live video content using adaptive streaming from a cache server to a client device during a live video content delivery session, the live video content being divided into segments, the segments being further divided into chunks, the method being implemented by the cache server, wherein the method comprises: receiving from the client device a manifest request that requests a manifest of the live video content, referred to as original manifest, and obtaining said original manifest; and determining whether or not said manifest request is the very first manifest request in said live content video delivery session. In the case where said manifest request is the very first one in said live video content delivery session, the method comprises: rewriting said original manifest by modifying a descriptor of at least one chunk so as to insert at least one additional start of independent group of pictures; and transmitting the rewritten manifest to the client device in response to the received manifest request. In the case where said manifest request is not the very first one in said live video content delivery session, the method comprises: determining whether or not at least one previously modified descriptor needs to be present in the requested manifest, according to whether or not the original manifest lists at least one chunk that needs transcoding, in view of the rewritten manifest transmitted in response to the very first manifest request of the live video content delivery session; in the case where at least one previously modified descriptor needs to be described, altering the original manifest with said at least one previously modified descriptor by replacing the description of said at least one chunk that needs transcoding in the original manifest by the description of said at least one chunk that needs transcoding which was put in the rewritten manifest transmitted in response to the very first manifest request of the live video content delivery session, and transmitting said altered original manifest in response to the received manifest request; and otherwise (i.e., no previously modified descriptor needs to be present in the requested manifest), transmitting the original manifest in response to the received manifest request.

Thus, by thus modifying the manifest for the very first one in said live video content delivery session, at least one new opportunity to start adaptive streaming for the client device is added by respectively the at least one additional start of independent group of pictures. The client device can thus join live streaming closer to the live edge, while encoding resources needs are limited to do so, since the at least one additional start of independent group of pictures are only added for the very first one in said live video content delivery session. It means that when the manifest is requested during a live video content delivery session already on-the-way, said at least one additional start of independent group of pictures is not added since the client device has already joined the live streaming.

In a particular embodiment, modifying the descriptor of at least one chunk when rewriting said original manifest comprises: identifying a join point expected to be used later by the client device to start playing the live video content; rewriting said original manifest so as to insert one said additional start of independent group of pictures at said identified join point.

Thus, the chances that the client device will benefit from one said additional start of independent group of pictures are increased.

In a particular embodiment, the join point expected to be used later on by the client device to start playing the live video content is defined as a predefined offset backward from the end of the list of chunks in the original manifest.

Thus, the join point that will be probably used by the client device is easily identified.

In a particular embodiment, the method comprises: checking whether or not a start of independent group of pictures is present at the identified join point; in the case where a start of independent group of pictures is present at the identified join point, transmitting the original manifest in response to the received manifest request; in the case where a start of independent group of pictures is not present at the identified join point, rewriting said original manifest so as to insert at least one additional start of independent group of pictures at said join point; and transmitting the rewritten manifest to the client device in response to the received manifest request.

Thus, later additional transcoding operations are limited.

In a particular embodiment, the method further comprises, when receiving a chunk request that requests a chunk described in said rewritten manifest or altered original manifest: instructing a transcoder to perform transcoding so as to obtain said requested chunk by decoding chunks in original form, reencoding the decoded chunks by inserting the at least one additional start of independent group of pictures and extracting the requested chunk described in the received chunk request; receiving the requested chunk from the transcoder; and transmitting said requested chunk to the client device.

Thus, transcoding is only performed when the client device effectively requests a chunk that has been impacted by the insertion of one said additional start of independent group of pictures.

In a particular embodiment, the chunks being indexed by byte range in the rewritten manifest, the method further comprises zero-padding the requested chunk received from the transcoder to keep the byte range unchanged before and after transcoding and compressing the zero-padded chunk using entropy coding.

Thus, transmission overhead due to the zero-padding is limited.

In a particular embodiment, said adaptive streaming is compliant with LL- DASH or LL-HLS protocol.

It is further proposed herein a computer program product comprising instructions causing implementation of the method above in any one of its embodiments, when the instructions are executed by a processor. It is further proposed herein a non-transitory storage medium that stores instructions causing implementation of the method above in any one of its embodiments, when the instructions are read from the non-transitory storage medium and executed by a processor.

A cache server is configured to deliver a live video content using adaptive streaming to a client device during a live video content delivery session, the live video content being segmented into segments, the segments being further divided into chunks, the cache server comprising electronic circuitry configured to implement: receiving from the client device a manifest request that requests a manifest of the live video content, referred to as original manifest, and obtaining said original manifest; determining whether or not said manifest request is the very first manifest request in said live content video delivery session. The electronic circuitry is further configured to implement, in the case where said manifest request is the very first one in said live video content delivery session: rewriting said original manifest by modifying a descriptor of at least one chunk so as to insert at least one additional start of independent group of pictures; transmitting the rewritten manifest to the client device in response to the received manifest request. The electronic circuitry is further configured to implement, in the case where said manifest request is not the very first one in said live video content delivery session: determining whether or not at least one previously modified descriptor needs to be present in the requested manifest, according to whether or not the original manifest lists at least one chunk that needs transcoding, in view of the rewritten manifest transmitted in response to the very first manifest request of the live video content delivery session; in the case where at least one previously modified descriptor needs to be described, altering the original manifest with said at least one previously modified descriptor by replacing the description of said at least one chunk that needs transcoding in the original manifest by the description of said at least one chunk that needs transcoding which was put in the rewritten manifest transmitted in response to the very first manifest request of the live video content delivery session, and transmitting said altered original manifest in response to the received manifest request; and otherwise (i.e., no previously modified descriptor needs to be present in the requested manifest), transmitting the original manifest in response to the received manifest request.

It is further proposed herein a Content Delivery Network (CDN) comprising such a cache server.

### BRIEF DESCRIPTION OF THE DRAWINGS

The characteristics of the invention will emerge more clearly from a reading of the following description of at least one embodiment, said description being produced with reference to the accompanying drawings, among which:
- Fig. 1 schematically represents a live video content delivery system according to a particular embodiment;
- Fig. 2 schematically represents a video segment divided into GOPs and further into chunks;
- Fig. 3A schematically represents a flowchart of a method for rewriting a manifest according to a particular embodiment;
- Fig. 3B schematically represents a flowchart of a method for rewriting a manifest according to a more particular embodiment;
- Fig. 4A schematically represents a flowchart of a method for delivering chunks of a live video content according to a particular embodiment;
- Fig. 4B schematically represents a flowchart of a method for transcoding chunks of a live video content according to a particular embodiment; and
- Fig. 5 schematically represents an example of hardware architecture of a cache server of the live video content delivery system, according to a particular embodiment.

### DETAILED DESCRIPTION OF AT LEAST ONE EMBODIMENT

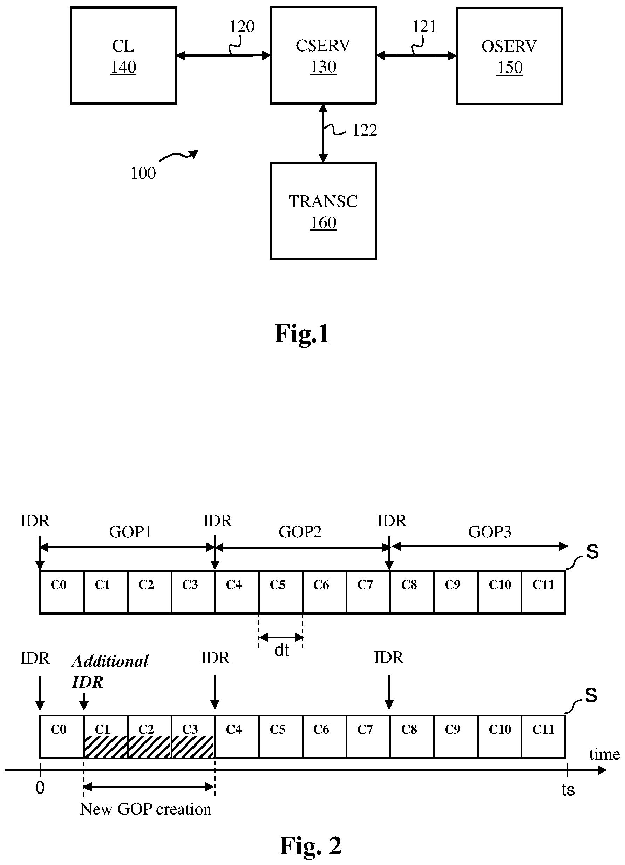

Fig. 1 schematically represents a live video content delivery system 100 comprising a cache server CSERV 130 and at least one client device CL 140. The at least one client device CL 140 is for example a desktop or laptop, a TV, a Set-Top Box, a tablet or a smartphone. The live video content delivery system 100 further comprises an originating server OSERV 150 (that may also referred to as "origin server"). The live video content delivery system 100 further comprises a transcoder TRANSC 160.

The cache server CSERV 130 is equipment in charge of delivering chunks of at least one live video content to the at least one client device CL 140 via a communication link 120. The at least one live video content may also include audio content so as to form a live audio-visual content. The cache server CSERV 130 may be a single server or a cluster of servers. The cache server CSERV 130 is preferably part of a Content Delivery Network CDN including at least one such cache server.

The live video contents are typically accompanied with respective playlists/manifests. Each playlist/manifest describes characteristics of the live video content (e.g., resolution, bit rate, etc) in question and how chunks of the live video content can be accessed (typically using URLs (acronym of "Uniform Resource Locator")). Each playlist/manifest includes a list of chunks made available for live video content delivery. For each live video content, the playlist/manifest in question is regularly updated along delivery of the live video content in order to list the chunks effectively close to the live edge, which means that a description of obsolete chunks is removed from the manifest and a description of newly available chunks is added in the manifest.

In the following, the word "manifest" is used to designate both a manifest in the sense of MPEG DASH (or LL-DASH) or a playlist in the sense of HLS (or LL-HLS).

The communication link 120 may be a physical link, such as a cable or a series of cables, or a wireless link. The communication link 120 may be a logical link, such as a communication path over a network, such as the Internet.

One client device CL 140 is represented in Fig. 1, but the live video content delivery system 100 typically comprises numerous client devices CL 140.

The originating server OSERV 150 is equipment in charge of packaging the at least one live video content in the form of segments divided into chunks. Segments are parts of the live video content on the boundaries of which a player of the client device CL 140 may switch from one representation to another in adaptive streaming (e.g., change of resolution according to available bandwidth evolution), while chunks are subparts of segments which provide finer granularity for transmission purpose in order to reduce transmission and buffering latency. In each segment, one or more consecutive chunks may form a GOP. Each segment thus consists of one or more GOPs, typically several GOPs, of one or more chunks. As already mentioned, each GOP starts with an IDR (start of GOP), which enables decoding any GOP independently from any preceding or following GOP. It therefore means that joining a live event (i.e., starting decoding a live video content) can be done at a GOP boundary used as a join point, even though the player of the client device CL 140 may start requesting chunks not at a GOP boundary. Indeed, the players are usually designed so as to start requesting chunks from a predefined offset OFF backward from the end of the list of chunks in the very first manifest (i.e., the first manifest in sequence in the live content video delivery session) obtained when having initiated a live video content delivery session.

The predefined offset OFF is for example a predefined value hard-coded in the live video content delivery system 100. The predefined offset OFF is, according to another example, defined by a recommendation parameter provided in the manifests, such as the PART-HOLD-BACK parameter in LL-HLS or the <TargetLatency> parameter in LL-DASH. The predefined offset OFF indicates a recommended minimum distance, from the end of the list of chunks in the very first manifest of the live video content delivery stream session, at which client devices should begin to play or to which they should seek when playing in low-latency mode. For example, the PART-HOLD-BACK parameter in LL-HLS must be at least twice the chunk duration (with respect to the live video content), and the PART-HOLD-BACK parameter in LL-HLS should be at least three times the chunk duration (with respect to the live video content).

The predefined offset OFF is for example expressed as a number of chunks (i.e., a quantity of chunks), as the PART-HOLD-BACK parameter in LL-HLS. The predefined offset OFF is, according to another example, expressed as a decimal-floating-point number of seconds.

The originating server OSERV 150 may be a single server or a cluster of servers. The cache server CSERV 130 obtains the at least one live video content, in a form of segments divided into chunks, from the originating server OSERV 150 via a communication link 121. The communication link 121 may be a physical link, such as a cable or a series of cables, or a wireless link. The communication link 121 may be a logical link, such as a communication path over a network, such as the Internet.

The transcoder TRANSC 160 is equipment in charge of performing transcoding operations on chunks, when requested by the cache server CSERV 130. Transcoding operations consist in decoding one or more chunks in original form so as to obtain decoded video data and then performing reencoding from all or some of the decoded video data so as to obtain a chunk in a transcoded form. Transcoding is for example used to modify a chunk that does not start with an IDR in its original form into a chunk that contains an IDR in its transcoded form.

The transcoder TRANSC 160 interacts with the cache server CSERV 130 via a communication link 122. The communication link 122 may be a physical link, such as a cable or a series of cables, or a wireless link. The communication link 122 may be a logical link, such as a communication path over a network, such as the Internet.

Alternatively, the transcoder TRANSC 160 may be embedded in the cache server CSERV 130.

Exchanges (messages, requests, responses...) in the live video content delivery system 100 are preferably performed using HTTP. Exchanges (messages, requests, responses...) in the live video content delivery system 100 are preferably compatible with LL-HLS or LL-DASH.

Each client device CL 140 comprises a player and a decoder. The decoder is configured (initialized or reinitialized) by the player according to encoding format and quality effectively in use and is in charge of decoding, in accordance, video data received by the player. The player is in charge of performing exchanges with the cache server CSERV 130 so as to receive the encoded video data from the cache server CSERV 130.

During operation, the client device CL 140 via its player first initiates a live video content delivery session, namely an adaptive streaming session, and transmits a manifest request, by typically sending a specific HTTP request, for obtaining at least one manifest associated with a desired live video content to the cache server CSERV 130. The live video content delivery session is identified by a session identifier that may be inserted in the manifest request as a prefix/suffix in an URL, as query arguments or as cookies in headers of the manifest request (e.g., HTTP headers).

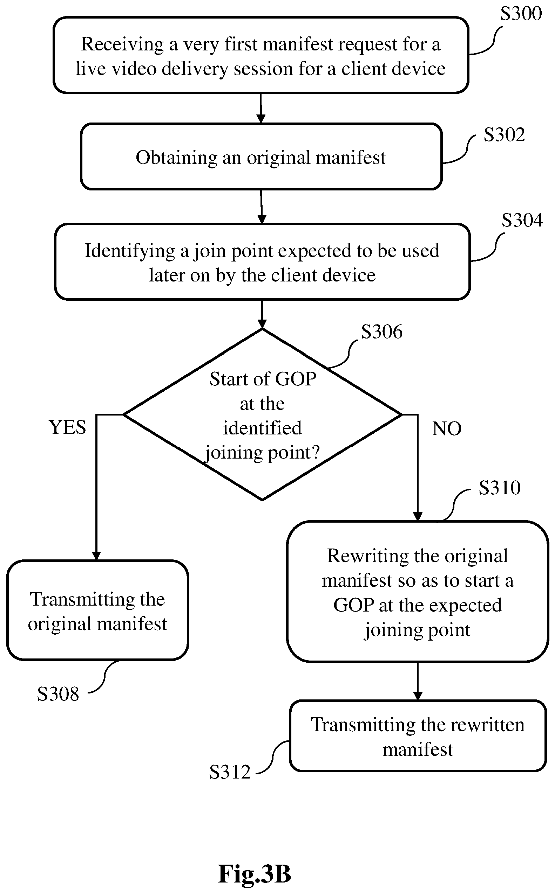

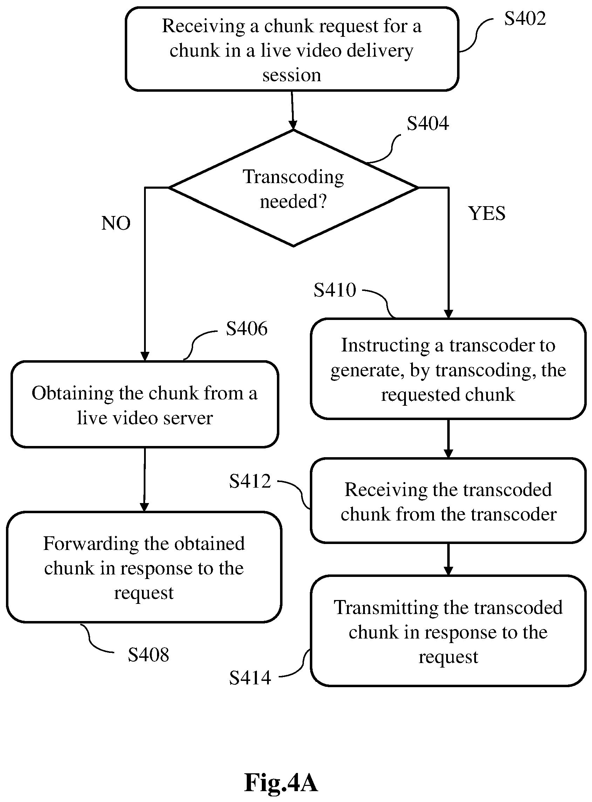

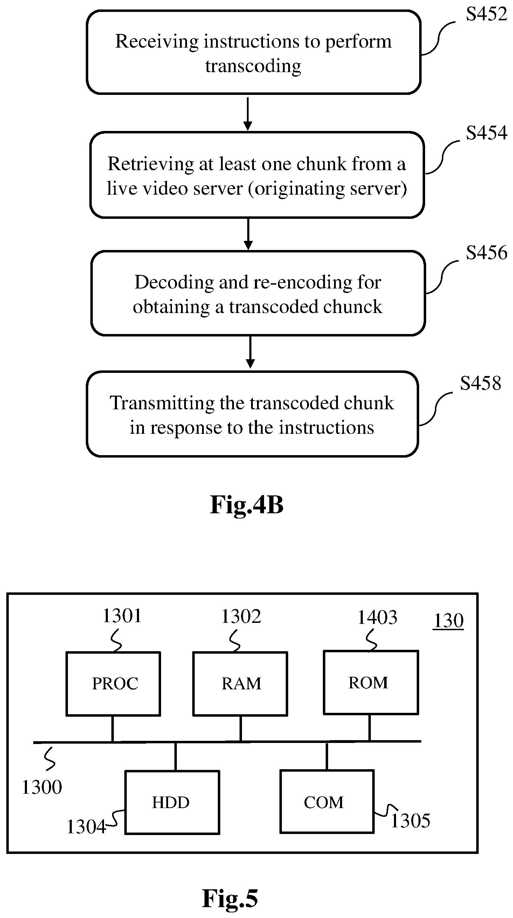

The cache server CSERV 130 detects that the manifest request in question is the very first manifest request of the live content video delivery session (i.e., the first manifest in sequence received from the client device CL 140 in the live content video delivery session). The cache server CSERV 130 thus performs a particular process so as to increase the candidate starting points for reading the live video content for the client device CL 140. To do so, the cache server CSERV 130 retrieves, from the originating server OSERV 150, the original manifest corresponding to the desired live video content and rewrites it to include at least one new start of GOP in the chunks listed in the original manifest. In other word, more chunks in the rewritten manifest start with an IDR image than in the original manifest. An example of inserting a new start of GOP in successive chunks is detailed hereafter with respect to Fig. 2. It may be noted that the cache server CSERV 130 may, in a variant, retrieve the original manifest from an internal cache, when the cache server CSERV 130 has previously retrieved the original manifest (e.g., for processing a manifest request from another client device) and has stored said original manifest in cache. Rewriting the manifest thus requires later on transcoding of at least one chunk specifically for the client device CL 140. Transcoding does not have to be done at that time, but when the at least one chunk in question has to be delivered, upon request, to the client device CL 140 later on. This is detailed hereafter with respect to Figs. 3A, 3B, 4A and 4B.

**Fig. 2** schematically represents a segment S of duration ts (e.g., ts=6 seconds), which is illustratively divided into 12 chunks of equal duration dt (e.g., dt=0.5 second).

At the top of Fig. 2, the segment S in its original form is represented. It is referred to as "original segment" and its chunks, therefore in their original form, are referred to as "original chunks".

The original segment comprises 3 GOPs (GOP1, GOP2 and GOP3). Each GOP begins with an IDR picture. In order to insert additional join point for the client device CL 140, the original segment is modified so as to obtain a modified segment, as illustratively shown at the bottom of Fig. 2. The modified segment includes at least one additional start of GOP and thus at least one respective IDR picture is included, in replacement of a non-IDR picture, in the segment S. Transcoding of at least one original chunk is thus necessary.

In the example of Fig. 2, an IDR picture is added at the beginning of the second chunk (C1) in sequence. This additional IDR may be instead added at the beginning of the third chunk (C2) in sequence. Consequently, the chunks C1 to C3 (i.e., those chunks up to a next IDR picture) need to be transcoded. In the case where the IDR picture is added at the beginning of the chunk C2, only the chunks C2 and C3 need to be transcoded. The chunks impacted by the insertion of a new IDR picture are represented with hatching on Fig.2. From the fifth chunk (C4) in sequence, the encoding is no more impacted by the insertion of the new IDR picture since the GOPs are independent (i.e., independently encoded) from each other.

Consequently, the modified segment comprises four GOPs corresponding to the same portion of the live video content as the original segment. In order to be able to insert the at least one additional start of GOP, the manifest describing the live video content needs to be rewritten. As this insertion of at least one additional start of GOP is specifically performed in response to the very first manifest request of a live video content delivery session (i.e., the first manifest in sequence in the live content video delivery session), the rewritten manifest is only transmitted to the client device CL 140 having transmitted said very first manifest request of the live video content delivery session, not to any other client device to which the live video content in question is under delivery.

Fig. 3A schematically represents a flowchart of a method for rewriting a manifest according to a particular embodiment. Rewriting the manifest makes it possible to add at least one additional IDR picture and thus at least one additional join point for the client device CL 140.

In a step S200, the cache server CSERV 130 receives a manifest request from one said client device CL 140 (typically, from its player) for obtaining a manifest (e.g., LL-HLS media playlist or a LL-DASH manifest) corresponding to a live video content.

As having a lot of chunks increases the size of the manifest significantly, chunks close to the live edge are only listed in the manifest. Therefore, the client device CL 140 in question (typically, its player) periodically transmits such manifest requests, for example every 0.5 second, along a live video content delivery session dedicated to the live video content being played by the client device CL 140. The manifest in question is regularly updated to list the chunks effectively close to the live edge, which means that a description of obsolete chunks is removed from the manifest and a description of newly available chunks is added in the manifest.

An example of an excerpt of such a manifest according to LL-HLS describing chunks of a live video segment is illustrated below (wherein the term "PART" refers to one chunk):
... #EXT-X-PART:DURATION=0.5,URI="filePart271.0.mp4",INDEPENDENT=YES #EXT-X-PART:DURATION=0.5,URI="filePart271.1.mp4" #EXT-X-PART:DURATION=0.5,URI="filePart271.2.mp4" #EXT-X-PART:DURATION=0.5,URI="filePart271.3.mp4" #EXT-X-PART:DURATION=0.5,URI="filePart271.4.mp4",INDEPENDENT=YES #EXT-X-PART:DURATION=0.5,URI="filePart271.5.mp4" #EXT-X-PART:DURATION=0.5,URI="filePart271.6.mp4" #EXT-X-PART:DURATION=0.5,URI="filePart271.7.mp4" #EXT-X-PART:DURATION=0.5,URI="filePart271.8. mp4", INDEPENDENT=YES #EXT-X-PART:DURATION=0.5,URI="filePart271.9.mp4" #EXT-X-PART:DURATION=0.5,URI="filePart271.10.mp4" #EXT-X-PART:DURATION=0.5,URI="filePart271.11.mp4" ...

This manifest describes a segment of 6 seconds divided into three independent GOPs of 2 seconds each, each GOP being divided into four chunks of 0.5 second each. The start of each GOP is indicated by "INDEPENDENT=YES". The respective durations of segments, GOPs and chunks are given as examples and may be of different values. In this example, the live video segment is described discreetly using a unique URI (standing for "Uniform Resource Identifier") for every chunk. Herein, the acronyms URI and URL are used interchangeably.

The first chunk in sequence, which is indexed by 0, begins with an IDR picture. The next chunk in sequence, which is indexed by 1, is not independent, which means that it depends on the previous chunk, namely the chunk indexed by 0. The next independent chunk is indexed by 4 and corresponds to the beginning of the second GOP of 2 seconds. A decoder can only start decoding on one IDR picture, thus on one chunk among the chunks indexed by 0, 4, or 8 in the example above.

In a step S202, the cache server CSERV 130 obtains the original manifest from the originating server OSERV 150. In the case where the original manifest is already stored in the cache server CSERV 130, the cache server CSERV 130 retrieves the original manifest from its memory.

In a step S204, the cache server CSERV 130 determines whether or not the received manifest request is the very first one of the live video content delivery session, for said client device CL 140 and for said live video content (i.e., the first manifest in sequence in the live content video delivery session). It means that, when receiving a very first manifest request for a live video content from one client device CL 140, the cache server CSERV 130 keeps in memory information indicating that said very first manifest request has already been received from said client device CL 140 for the live video content in question.

The step S204 may be implemented before the step S202.

In the case where the cache server CSERV 130 determines that this is the very first manifest request in said live video content delivery session, then the cache server CSERV 130 rewrites, in a step S206, the original manifest so as to insert at least one additional start of GOP.

As an example based on LL-HLS, a manifest portion as shown on the top of the following table is rewritten to obtain a rewritten manifest portion as shown on the bottom of the following table:

| Original manifest portion |
|---|
| ... |
| *#EXT-X-PART:DURATION=0.5,URI="filePart271.0.mp4",INDEPENDENT=YES* |
| *#EXT-X-PART:DURATION=0.5,URI="filePart271.1.mp4"* |
| *#EXT-X-PART.-DURATION=0.5, URI= "filePart271.2.mp4"* |
| *#EXT-X-PART.-DURATION=0.5, URI= "filePart271.3.mp4"* |
| ... |

| Rewritten manifest portion |
|---|
| ... |
| *#EXT-X-PART:DURATION=0.5,URI="filePart271.0.mp4",INDEPENDENT=YES* |
| ***#EXT-X PART:DURATION=0.5,URI="filePart271.1.mp4?transcode=filePart271.mp4&join=1& part=1",INDEPENDENT=YES*** |
| ***#EXT-X-PART:DURATION=0.5,URI="filePart271.2.mp4?transcode=filePart271.mp4&join=1& part=2"*** |
| ***#EXT-X-PART :DURATION=0.5,URI= »filePart271.3.mp4 ?transcode=filePart271.mp4&join=1 &part=3 »*** |
| ... |

In this example, the URI related to the second chunk in sequence (namely the chunk indexed by 1) that directly follows the first independent chunk (namely the chunk indexed by 0) is modified from URI="filePart271.1.mp4" to URI="filePart271.1.mp4?transcode=filePart271.mp4&join=1&part=1" in order to indicate that this second chunk in sequence (chunk indexed by 1) is to be obtained by transcoding so as to start with an IDR picture. The URI of each chunk (namely chunks 2 and 3) that follows in the same GOP are also modified to indicate that a transcoding is needed since they are dependent on said chunk that has to be obtained by transcoding so as to start with an IDR picture (namely the chunk indexed by 1).

As illustrated on Fig.2, from the chunk indexed by 4 (the chunk C4 on Fig. 2), the manifest remains unchanged, since another GOP starts with said chunk indexed by 4. Thus, the initial GOP of 2 seconds is split into two GOPs, one first GOP of 0.5 second and one second GOP of 1.5 second.

The modified URIs contain information necessary for the transcoder TRANSC 160 to access the beginning of a segment (e.g., "filePart271.mp4" in the example above), the place where to put the IDR ("join=1" indicating that the IDR picture has to be put at the beginning of the chunk indexed by 1), the reference to the chunk that shall be transmitted (e.g., "part=1"). Indeed, in order to obtain a chunk, the client device CL 140 includes in a chunk request the URI that was associated with the chunk in question in the manifest that said client device CL 140 has obtained beforehand from the cache server CSERV 130. When the cache server CSERV 130 receives a chunk request containing an URI that indicates that transcoding operations are necessary to be able to provide the requested chunk, the cache server CSERV 130 instructs the transcoder TRANSC 160 to perform the adequate transcoding operations and provides the transcoder TRANSC 160 with the URI in question.

As an example, when receiving the modified URI "filePart271.1.mp4?transcode=filePart271.mp4&join=1&part=2", the transcoder TRANSC 160 knows that it has to decode the live video content from the beginning of the segment filePart271.mp4 (implicitly considered as the chunk indexed by 0), starts encoding a new GOP from the start point indicated by the tag "join" (pointing here to the chunk indexed by 1), and then extracts and sends back to the cache server CSERV 130 only the chunk indicated by the tag "part" (which corresponds to the chunk indexed by 2).

The cache server CSERV 130 further keeps in memory information indicating which chunks have to incur transcoding in view of the rewritten manifest.

In a step S208, the cache server CSERV 130 transmits the rewritten manifest to the client device CL 140 in response to the manifest request received in the step S200. In this case, when the client device CL 140 will later request live video content from the information contained in this rewritten manifest, the client device CL 140 will be able for example to request the chunk indexed by 1, wherein this chunk will be transcoded using the information contained in the corresponding URI (modified URI). Once the step S208 has been performed, the algorithm of Fig. 3A ends.

In the case where the cache server CSERV 130 determines that the manifest request received in the step S200 is not the very first manifest request in the live video content delivery session, then, in a step S210, the cache server CSERV 130 has to determine whether or not the original manifest lists at least one chunk that needs transcoding, in view of the rewritten manifest transmitted in response to the very first manifest request of the live video content delivery session. Indeed, consistency shall be ensured among successive manifests. When the original manifest lists at least one chunk that needs transcoding, a step S212 is performed; otherwise, a step S216 is performed.

In the step S212, the cache server CSERV 130 alters the original manifest by replacing the description of the chunks in question in the original manifest by the description of said chunks that was put in the rewritten manifest transmitted in response to the very first manifest request of the live video content delivery session.

As an example, if the URIs relating to the chunks indexed by 1, 2 and 3 are modified in the step S206, the cache server CSERV 130 has to ensure to transmit, in response to the new manifest request received in the step S200, a manifest that is coherent with the content of the rewritten manifest transmitted in response to the very first manifest request of the live video content delivery session. If for example, the chunk indexed by 3 still need to be described in the manifest to transmit in response to the new manifest request received in the step S200, the cache server CSERV 130 replaces the description of the chunk indexed by 3 in the original manifest by the description of the chunk indexed by 3 as indicated in the rewritten manifest (previous execution of the step 206).

In a step S214, the cache server CSERV 130 transmits the manifest altered in step S212 to the client device CL 140 in response to the new manifest request received in the step S200. Once the step S214 has been performed, the algorithm of Fig. 3A ends.

In a step S216, the cache server CSERV 130 transmits the original manifest to the client device CL 140 in response to the manifest request received in the step S200. Once the step S216 has been performed, the algorithm of Fig. 3A ends.

The method disclosed above with an exemplary LL-HLS-compatible manifest describing a discrete list of chunks also applies to an LL-HLS-compatible manifest wherein each chunk is addressed with a byte range that specifies the length of the chunk and an offset at which the chunk is located within its segment. An example of rewriting such a manifest is provided in the following table:

| Original manifest portion |
|---|
| ... |
| *#EXT-X-PART:DURATION=0.5,URI="filePart271.mp4", BYTERANGE=0-xxx, INDEPENDENT=YES* |
| *#EXT-X-PART:DURATION=0.5,URI="filePart271.mp4", BYTERANGE=xxx-yyy* |
| *#EXT-X-PART:DURATION=0.5,URI="filePart271.mp4", BYTERANGE=yyy-zzz* |
| *#EXT-X-PART:DURATION=0.5,URI="filePart271.mp4", BYTERANGE=zzz-vvv* |
| *#EXT-X-PRELOAD-HINT,URI="filePart271.mp4",BYTERANGE=vvv-* |
| ... |

| Rewritten manifest portion |
|---|
| ... |
| *#EXT-X-PART:DURATION=0.5,URI="filePart271.mp4", BYTERANGE=0-xxx, INDEPENDENT=YES* |
| ***#EXT-X-PART:DURATION=0.5,URI="filePart271.mp4?transcode=filePart271.mp4&join=xxx&range=x* *xx*-*yyy",INDEPENDENT=YES*** |
| ***#EXT-X-PART:DURATION=0.5,URI="filePart271.mp4?transcode=filePart271.mp4&join=xxx& range=yyy-zzz"*** |
| ***#EXT-X-PART:DURATION=0.5,URI="filePart271.mp4?transcode=filePart271.mp4&join=xxx& range=zzz-vvv**"* |
| ***#EXT-X-PRELOAD-HINT,URL='filePart271.mp4?transcode=filePart271.mp4&join=xxx&range=vvv"*** |
| ... |

Here, the byte-ranges in the original manifest are moved to query arguments to inform the transcoder TRANSC 160 where chunks start and end in the live video content that the transcoder TRANSC 160 shall transcode.

In the above table, the tag "EXT-X-PRELOAD-HINT" provides a preload hint indication to the client device CL 140 (typically, to its player) which data will be required to continue playing the live video content. It allows the client device CL 140 to anticipate and send a request to the URI listed in the preload hint indication to get faster access. For PRELOAD HINT chunks, for which the last-byte-position is not yet known, only the start of the byte range is signaled.

It may be noted that in the examples provided herein the expression "vvv" (i.e., without upper bound) refers to an open range.

It is known that transcoding may modify byte range. Therefore, in a particular embodiment, in order to keep the original byte range identification of chunks after transcoding, zero-padding is used. In addition, compression using entropy coding (such as gzip) of the live video content chunks (e.g., mp4 files) is used on the zero-padded chunks and thus limits transmission overhead due to padding. Since the first transcoded chunk in sequence sees its size significantly increased, its byte range starts at offset 0, as illustratively disclosed in the following table:

| Original manifest portion |
|---|
| ... |
| *#EXT-X-PART:DURATION=0.5,URI="filePart271.mp4", BYTERANGE=0-xxx, INDEPENDENT=YES* |
| *#EXT-X-PART:DURATION=0.5,URI="filePart271.mp4", BYTERANGE=xxx-yyy* |
| *#EXT-X-PART:DURATION=0.5,URI="filePart271.mp4", BYTERANGE=yyy-zzz* |
| *#EXT-X-PART:DURATION=0.5,URI="filePart271.mp4", BYTERANGE=zzz-vvv* |
| *#EXT-X-PRELOAD-HINT,URL=filePart271.mp4",BYTERANGE=vvv-* |
| ... |

| Rewritten manifest portion |
|---|
| ... |
| *#EXT-X-PART:DURATION=0.5,URI='filePart271.mp4",BYTERANGE=0-xxx, INDEPENDENT=YES* |
| *#EXT-X-PART:DURATION=0.5,URI="filePart271.mp4?transcode=filePart271.mp4&join=xxx'; BYTERANGE=0-yyy, INDEPENDENT=YES* |
| *#EXT-X-PART:DURATION=0.5,URI="filePart271.mp4?transcode=filePart271.mp4&join=xxx",BYTER ANGE=yyy-zzz* |
| *#EXT-X-PART:DURATION=0.5,URI="filePart271.mp4?transcode=filePart271.mp4&join=xxx",BYTER ANGE=zzz-vvv* |
| *#EXT-X-PRELOAD-INT,URL="filePart271.mp4?transcode=filePart271.mp4&join=xxx",BYTERANGE=vvv-* |
| ... |

In yet another embodiment, a timestamp rather than an offset is used to specify the join point. This allows shared media segments between DASH and HLS. An illustrative embodiment is shown in the following table. Again, as the byte range information is needed before the actual transcoding occurs, the cache server CSERV 130 adds sufficient zero-padding to have the original byte range preserved after transcoding and leverage entropy coding (such as gzip) to ensure that the zero-padding does not incur an actual transmission overhead as zero-padded zones can be efficiently compressed.

| Original manifest portion |
|---|
| ... |
| *#EXT-X-PART:DURATION=0.5,URI='filePart271.mp4",BYTERANGE=0-xxx, INDEPENDENT=YES* |
| *#EXT-X-PART:DURATION=0.5,URI='filePart271.mp4",BYTERANGE=xxx-yyy* |
| *#EXT-X-PART:DURATION=0.5,URI='filePart271.mp4",BYTERANGE=yyy-zzz* |
| *#EXT-X-PART:DURATION=0.5,URI='filePart271.mp4",BYTERANGE=zzz-vvv* |
| *#EXT-X-PRELOAD-HINT,URL="filePart271.mp4",BYTERANGE=vvv-* |
| ... |

| Rewritten manifest portion |
|---|
| ... |
| *#EXT-X-PART:DURATION=0.5,URI='filePart271.mp4",BYTERANGE=0-xxx, INDEPENDENT=YES* |
| *#EXT-X-PART:DURATION=0.5,URI="filePart271.mp4?transcode=filePart271.mp4&join=timestamp_ part1", BYTERANGE=0-yyy, INDEPENDENT=YES* |
| *#EXT-X-PART:DURATION=0.5,URI="filePart271.mp4?transcode=filePart271.mp4&join=timestamp_ part1", BYTERANGE=yyy-zzz* |
| *#EXT-X-PART:DURATION=0.5,URI="filePart271.mp4?transcode=filePart271.mp4&join=timestamp_ part1", BYTERANGE=zzz-vvv* |
| *#EXT-X-PRELOAD-HINT,URL="filePart271.mp4?transcode=filePart271.mp4&join=timestamp_part1",BYTERA NGE=vvv-* |
| ... |

**Fig. 3B** schematically represents a flowchart of a method for rewriting a manifest according to a more particular embodiment.

In a step S300, the cache server CSERV 130 receives a manifest request from one said client device CL 140 (typically, from its player) for obtaining a manifest (e.g., LL-HLS media playlist or a LL-DASH manifest) corresponding to a live video content. The manifest request is the very first manifest request in the live video content delivery session.

In a step S302, the cache server CSERV 130 obtains the original manifest from the originating server OSERV 150. In the case where the original manifest is already stored in the cache server CSERV 130, the cache server CSERV 130 retrieves the original manifest from its memory.

In a step S304, the cache server CSERV 130 identifies a join point expected to be used later on by the client device CL 140. It is considered, in the scope of Fig. 3B, that the players are usually designed so as to start requesting chunks from aforementioned predefined offset OFF backward from the end of the list of chunks in the very first manifest obtained when having initiated a live video content delivery session (such as the PART-HOLD-BACK parameter in LL-HLS or the <TargetLatency> parameter in LL-DASH).

In a step S306, the cache server CSERV 130 checks whether or not the original manifest already indicates a start of GOP at the join point identified in the step S304. When the original manifest already indicates a start of GOP at the join point identified in the step S304, a step S308 is performed; otherwise, a step S310 is performed.

In the step S308, the cache server CSERV 130 transmits the original manifest to the client device CL 140 in response to the manifest request received in the step S300. Once the step S308 has been performed, the algorithm of Fig. 3B ends.

In the step S310, the cache server CSERV 130 rewrites the original manifest so as to indicate that a GOP starts at the join point identified in the step S304. Adding a start of GOP is performed as already explained with respect to Fig. 3A.

In a step S312, the cache server CSERV 130 transmits the rewritten manifest to the client device CL 140 in response to the manifest request received in the step S300. Once the step S312 has been performed, the algorithm of Fig. 3B ends.

Thus, by applying the algorithm of Fig; 3B upon receiving the very first manifest request in the live video content delivery session enables ensuring that a start of GOP is present at the place in the live video content from which the client device CL 140 is expected to start requesting chunks of the live video content.

**Fig.4A** schematically represents a flowchart of a method for delivering chunks of a live video content in a live video delivery session, according to a particular embodiment.

In a step S402, the cache server CSERV 130 receives from the client device CL 140 a chunk request for obtaining a chunk of the live video content.

In a step S404, the cache server CSERV 130 checks whether or not providing the chunk in question needs transcoding.

Preferably, the cache server CSERV 130 determines if the chunk in question needs transcoding by analysing the chunk request.

In a variant, when having rewritten the manifest transmitted in response to the very first manifest request of the live content delivery session, the cache server CSERV 130 kept track of the chunk or chunks that need transcoding.

When the cache server CSERV 130 determines that the chunk in question needs transcoding, a step S410 is performed; otherwise a step S406 is performed.

In the step S406, the cache server CSERV 130 obtains the chunk in question from the originating server OSERV 150, and in a step S408, the cache server CSERV 130 forwards the obtained chunk, in response to the chunk request received in the step S400. Once the step S408 is performed, the algorithm of Fig. 4A ends.

In the step S410, the cache server CSERV 130 instructs the transcoder TRANSC 160 to perform necessary transcoding operations so as to obtain the chunk in question (transcoded chunk).

In a step S412, the cache server CSERV 130 forwards the transcoded chunk obtained from the transcoder TRANSC 160, in response to the chunk request received in the step S400. Once the step S412 is performed, the algorithm of Fig. 4A ends.

It appears from the algorithm of Fig; 4A that the transcoding operations are performed only if the client device CL 140 requests a chunk impacted by the inclusion of one or more IDR picture (potential join point) as indicated in the rewritten manifest. The transcoding operations are thus not performed when rewriting the manifest in response to the very first manifest request of the live video content delivery session, but only when effectively needed. Transcoding resources are thus preserved.

**Fig.4B** schematically represents a flowchart of a method for transcoding chunks of a live video content according to a particular embodiment.

In a step S452, the transcoder TRANSC 160 receives instructions from the cache server CSERV 130 (step S410) to necessary transcoding operations so as to obtain a chunk, which is requested by the client CL 140, and which requires transcoding (transcoded chunk). The instructions indicate the at least one chunk in original form to be retrieved so as to enable obtaining a particular transcoded chunk, as well as a position where to insert an IDR picture (compared with the concerned segment in original form).

In a step S454, the transcoder TRANSC 160 retrieves the at least one chunk in question from the originating server OSERV 150 (live video server from which the chunks in original form can be obtained).

In a step S456, the transcoder TRANSC 160 decodes the at least one chunk retrieved from the originating server OSERV 150 and performs re-encoding of the decoded at least one chunk so as to obtain a transcoded chunk as requested by the instructions received in the step S452.

In a step S456, the transcoder TRANSC 160 transmits the transcoded chunk to the cache server CSERV 130 in response to the instructions received in the step S452. The cache server CSERV 130 is then able to transmit the transcoded chunk in question to the client device CL 140 (step 412).

As an example, let's consider instructions for obtaining a chunk indexed by id2 and indicated as requiring transcoding in the rewritten manifest as follows: http://.../filePart271.1.mp4?transcode=filePart271.mp4&join= id1&part= id2. The URI in the chunk request thus identifies the at least one chunk in original form to be retrieved (i.e., here a segment identified by filePart271.mp4), a position where to insert an IDR picture (i.e., join = id1) so as to insert a new start of GOP at said position and the requested chunk (i.e., part=id2).

The transcoder TRANSC 160 retrieves the original segment needed to generate the requested chunk, namely filePart271.mp4. The transcoder TRANSC 160 implicitly knows that it has to decode the at least one chunk of the segment filePart271.mp4 (in original form) from the beginning (i.e., from the chunk indexed by 0), and then that it has to reencode the decoded at least one chunk by including a new start of GOP at the chunk indexed by id1, and further that it has to extract the chunk indexed by id2.

Fig. 5 illustrates schematically an example of a hardware architecture of a cache server CSERV 130 according to a particular embodiment. The hardware architecture also applies to the transcoder TRANSC 160.

The cache server CSERV 130 comprises, interconnected by a communication bus 1300: a processor or CPU (acronym of "Central Processing Unit") 1301; a random access memory RAM 1302; a read only memory ROM 1303; a storage unit 1304 such as a HDD (acronym of "Hard Disk Drive") or such as a storage medium reader (e.g., a SD (acronym of "Secure Digital") card reader); and at least one set of communication interfaces COM 1305 enabling the cache server CSERV 130 to transmit and receive data (e.g., manifest, chunks, etc.) and messages (e.g., requests, responses, etc.).

The processor 1301 is capable of executing instructions loaded into the RAM 1302 from the ROM 1303, from an external memory (such as an SD card), from a storage medium (such as the HDD), or from a communication network. When the cache server CSERV 130 is powered up, the processor 1301 is capable of reading instructions from the RAM 1402 and executing them. These instructions form a computer program causing the implementation, by the processor 1301, of the methods described in relation to Figs. 3 and 4.

The methods described herein with respect to the cache server CSERV 130 may be implemented in software form by the execution of the set of instructions by a programmable machine, for example a DSP (acronym of "Digital Signal Processor"), a microcontroller or a GPU (acronym of "Graphics Processing Unit"), or be implemented in hardware form by a machine or a dedicated chip or a dedicated chipset, for example an FPGA (acronym of "Field-Programmable Gate Array") or an ASIC (acronym of "Application-Specific Integrated Circuit"). In general, the cache server CSERV 130 includes electronic circuitry adapted and configured for implementing the method steps described herein with respect to the cache server CSERV 130. In general, the transcoder TRANSC 160 similarly includes electronic circuitry adapted and configured for implementing the method steps described herein with respect to the transcoder TRANSC 160.

## Claims

1. A method for delivering a live video content using adaptive streaming from a cache server (130) to a client device (140) during a live video content delivery session, the live video content being divided into segments, the segments being further divided into chunks, the method being implemented by the cache server (130), wherein the method comprises:
- receiving (S200) from the client device (140) a manifest request that requests a manifest of the live video content, referred to as original manifest, and obtaining (S202) said original manifest;
- determining (S204) whether or not said manifest request is the very first manifest request in said live video content delivery session;
wherein, in the case where said manifest request is the very first one in said live video content delivery session, the method comprises:
- rewriting (S206) said original manifest by modifying a descriptor of at least one chunk so as to insert at least one additional start of independent group of pictures;
- transmitting (S208) the rewritten manifest to the client device in response to the received manifest request;
wherein, in the case where said manifest request is not the very first one in said live video content delivery session, the method comprises:
- determining (S210) whether or not at least one previously modified descriptor needs to be present in the requested manifest, according to whether or not the original manifest lists at least one chunk that needs transcoding, in view of the rewritten manifest transmitted in response to the very first manifest request of the live video content delivery session;
- in the case where at least one previously modified descriptor needs to be described, altering (S212) the original manifest with said at least one previously modified descriptor by replacing the description of said at least one chunk that needs transcoding in the original manifest by the description of said at least one chunk that needs transcoding which was put in the rewritten manifest transmitted in response to the very first manifest request of the live video content delivery session, and transmitting (S214) said altered original manifest in response to the received manifest request; and
- otherwise, transmitting (S216) the original manifest in response to the received manifest request.

2. The method according to claim 1, wherein modifying the descriptor of at least one chunk when rewriting (S206) said original manifest comprises:
- identifying (S304) a join point expected to be used later by the client device (140) to start playing the live video content;
- rewriting (S310) said original manifest so as to insert one said additional start of independent group of pictures at said identified join point.

3. The method according to claim 2, wherein the join point expected to be used later on by the client device (140) to start playing the live video content is defined as a predefined offset backward from the end of the list of chunks in the original manifest.

4. The method according to claim 2 or 3, comprising:
- checking whether or not a start of independent group of pictures is present at the identified join point;
- in the case where a start of independent group of pictures is present at the identified join point, transmitting (S308) the original manifest in response to the received manifest request;
- in the case where a start of independent group of pictures is not present at the identified join point, rewriting (S310) said original manifest so as to insert at least one additional start of independent group of pictures at said join point; and
- transmitting (S312) the rewritten manifest to the client device in response to the received manifest request.

5. The method according to any one of claims 1 to 4, wherein the method further comprises, when receiving (S402) a chunk request that requests a chunk described in said rewritten manifest or altered original manifest:
- instructing (S410) a transcoder (160) to perform transcoding so as to obtain said requested chunk by decoding chunks in original form, reencoding the decoded chunks by inserting the at least one additional start of independent group of pictures and extracting the requested chunk described in the received chunk request;
- receiving (S412) the requested chunk from the transcoder (160); and
- transmitting (S414) said requested chunk to the client device (140).

6. The method according to claim 5, wherein chunks being indexed by byte range in the rewritten manifest, the method further comprises zero-padding the requested chunk received from the transcoder to keep the byte range unchanged before and after transcoding and compressing the zero-padded chunk using entropy coding.

7. The method according to any one of claims 1 to 6, wherein said adaptive streaming is compliant with LL- DASH or LL-HLS protocol.

8. A computer program product comprising instructions causing implementation of the method according to any one of claims 1 to 7, when the instructions are executed by a processor.

9. A storage medium storing instructions causing implementation of the method according to any one of claims 1 to 7, when the instructions are read from the storage medium and executed by a processor.

10. A cache server configured to deliver a live video content using adaptive streaming to a client device during a live video content delivery session, the live video content being segmented into segments, the segments being further divided into chunks, the cache server comprising electronic circuitry configured to implement:
- receiving (S200) from the client device (140) a manifest request that requests a manifest of the live video content, referred to as original manifest, and obtaining (S202) said original manifest;
- determining (S204) whether or not said manifest request is the very first manifest request in said live video content delivery session;
wherein, in the case where said manifest request is the very first one in said live video content delivery session, the method comprises:
- rewriting (S206) said original manifest by modifying a descriptor of at least one chunk so as to insert at least one additional start of independent group of pictures;
- transmitting (S208) the rewritten manifest to the client device in response to the received manifest request;
wherein, in the case where said manifest request is not the very first one in said live video content delivery session, the method comprises:
- determining (S210) whether or not at least one previously modified descriptor needs to be present in the requested manifest, according to whether or not the original manifest lists at least one chunk that needs transcoding, in view of the rewritten manifest transmitted in response to the very first manifest request of the live video content delivery session;
- in the case where at least one previously modified descriptor needs to be described, altering (S212) the original manifest with said at least one previously modified descriptor by replacing the description of said at least one chunk that needs transcoding in the original manifest by the description of said at least one chunk that needs transcoding which was put in the rewritten manifest transmitted in response to the very first manifest request of the live video content delivery session, and transmitting (S214) said altered original manifest in response to the received manifest request; and
- otherwise, transmitting (S216) the original manifest in response to the received manifest request.

11. A Content Delivery Network CDN comprising a cache server according to claim 10.

## Patentansprüche

1. Verfahren zur Auslieferung eines Livevideoinhalts mithilfe von adaptivem Streaming von einem Zwischenspeicher-Server (130) an ein Clientgerät (140) während einer Livevideoinhalt-Auslieferungssitzung, wobei der Livevideoinhalt in Segmente aufgeteilt ist, wobei die Segmente weiter in Chunks aufgeteilt sind, wobei das Verfahren vom Zwischenspeicher-Server (130) implementiert wird, wobei das Verfahren Folgendes umfasst:
- Empfangen (S200) einer Manifestanforderung vom Clientgerät (140), die ein Manifest des Livevideoinhalts anfordert, das als Originalmanifest bezeichnet wird, und Erhalten (S202) des Originalmanifests;
- Bestimmen (S204), ob die Manifestanforderung die allererste Manifestanforderung in der Livevideoinhalt-Auslieferungssitzung ist oder nicht;
wobei in dem Fall, dass die Manifestanforderung die allererste in der Livevideoinhalt-Auslieferungssitzung ist, das Verfahren Folgendes umfasst:
- Umschreiben (S206) des Originalmanifests durch Modifizierung eines Deskriptors wenigstens eines Chunks, um wenigstens einen zusätzlichen Anfang einer unabhängigen Bildergruppe einzufügen;
- Senden (S208) des umgeschriebenen Manifests an das Clientgerät als Reaktion auf die empfangene Manifestanforderung;
wobei in dem Fall, dass die Manifestanforderung nicht die allererste in der Livevideoinhalt-Auslieferungssitzung ist, das Verfahren Folgendes umfasst:
- Bestimmen (S210), ob wenigstens ein zuvor modifizierter Deskriptor im angeforderten Manifest vorhanden sein muss oder nicht, je nachdem, ob das Originalmanifest wenigstens einen Chunk aufführt, der einer Transcodierung im Hinblick auf das umgeschriebene Manifest bedarf, das als Reaktion auf die allererste Manifestanforderung der Livevideoinhalt-Auslieferungssitzung gesendet wurde;
- in dem Fall, dass wenigstens ein zuvor modifizierter Deskriptor beschrieben werden muss, Verändern (S212) des Originalmanifests mit dem wenigstens einen zuvor modifizierten Deskriptor durch Ersetzen der Beschreibung des wenigstens einen Chunks, der einer Transcodierung bedarf, im Originalmanifest durch die Beschreibung des wenigstens einen Chunks, der einer Transcodierung bedarf, der in das umgeschriebene Manifest eingesetzt wurde, das als Reaktion auf die allererste Manifestanforderung der Livevideoinhalt-Auslieferungssitzung gesendet wurde, und Senden (S214) des veränderten Originalmanifests als Reaktion auf die empfangene Manifestanforderung; und
- anderenfalls Senden (S216) des Originalmanifests als Reaktion auf die empfangene Manifestanforderung.

2. Verfahren nach Anspruch 1, wobei Modifizieren des Deskriptors wenigstens eines Chunks beim Umschreiben (S206) des Originalmanifests Folgendes umfasst:
- Ermitteln (S304) eines Verbindungspunkts, der voraussichtlich später vom Clientgerät (140) verwendet wird, um die Wiedergabe des Livevideoinhalts zu starten;
- Umschreiben (S310) des Originalmanifests, um einen solchen zusätzlichen Anfang einer unabhängigen Bildergruppe an dem ermittelten Verbindungspunkt einzufügen.

3. Verfahren nach Anspruch 2, wobei der Verbindungspunkt, der voraussichtlich später vom Clientgerät (140) verwendet wird, um die Wiedergabe des Livevideoinhalts zu starten, als ein vorgegebener Versatz rückwärts vom Ende der Liste von Chunks im Originalmanifest definiert ist.

4. Verfahren nach Anspruch 2 oder 3, umfassend:
- Prüfen, ob ein Anfang einer unabhängigen Bildergruppe am ermittelten Verbindungspunkt vorhanden ist oder nicht;
- in dem Fall, dass ein Anfang einer unabhängigen Bildergruppe am ermittelten Verbindungspunkt vorhanden ist, Senden (S308) des Originalmanifests als Reaktion auf die empfangene Manifestanforderung;
- in dem Fall, dass ein Anfang einer unabhängigen Bildergruppe nicht am ermittelten Verbindungspunkt vorhanden ist, Umschreiben (S310) des Originalmanifests, um wenigstens einen zusätzlichen Anfang einer unabhängigen Bildergruppe an dem Verbindungspunkt einzufügen; und
- Senden (S312) des umgeschriebenen Manifests an das Clientgerät als Reaktion auf die empfangene Manifestanforderung.

5. Verfahren nach einem der Ansprüche 1 bis 4, wobei das Verfahren ferner beim Empfangen (S402) einer Chunk-Anforderung, die einen Chunk anfordert, der im umgeschriebenen Manifest oder veränderten Originalmanifest beschrieben ist, Folgendes umfasst:
- Anweisen (S410) eines Transcodierers (160) Transcodierung durchzuführen, um den angeforderten Chunk zu erhalten, indem Chunks in Originalform decodiert werden, die decodierten Chunks durch Einfügung des wenigstens einen zusätzlichen Anfangs einer unabhängigen Bildergruppe erneut codiert werden und der angeforderte Chunk, der in der empfangenen Chunk-Anforderung beschrieben ist, extrahiert wird;
- Empfangen (S412) des angeforderten Chunks vom Transcodierer (160); und
- Senden (S414) des angeforderten Chunks an das Clientgerät (140).

6. Verfahren nach Anspruch 5, wobei Chunks im umgeschriebenen Manifest nach Bytebereich indiziert werden, wobei das Verfahren ferner Auffüllen des vom Transcodierer empfangenen angeforderten Chunks mit Nullen, um den Bytebereich vor und nach der Transcodierung unverändert zu lassen, und Komprimieren des mit Nullen aufgefüllten Chunks unter Verwendung von Entropiecodierung umfasst.

7. Verfahren nach einem der Ansprüche 1 bis 6, wobei das adaptive Streaming dem LL- DASH- oder LL-HLS-Protokoll entspricht.

8. Computerprogrammprodukt, das Anweisungen umfasst, die die Implementierung des Verfahrens nach einem der Ansprüche 1 bis 7 bewirken, wenn die Anweisungen durch einen Prozessor ausgeführt werden.

9. Speichermedium, das Anweisungen speichert, die die Implementierung des Verfahrens nach einem der Ansprüche 1 bis 7 bewirken, wenn die Anweisungen aus dem Speichermedium gelesen und durch einen Prozessor ausgeführt werden.

10. Zwischenspeicher-Server, der dazu ausgebildet ist, einen Livevideoinhalt mithilfe von adaptivem Streaming an ein Clientgerät während einer Livevideoinhalt-Auslieferungssitzung auszuliefern, wobei der Livevideoinhalt in Segmente segmentiert ist, wobei die Segmente weiter in Chunks aufgeteilt sind, wobei der Zwischenspeicher-Server eine elektronische Schaltung umfasst, die dazu ausgebildet ist, Folgendes zu implementieren:
- Empfangen (S200) einer Manifestanforderung vom Clientgerät (140), die ein Manifest des Livevideoinhalts anfordert, das als Originalmanifest bezeichnet wird, und Erhalten (S202) des Originalmanifests;
- Bestimmen (S204), ob die Manifestanforderung die allererste Manifestanforderung in der Livevideoinhalt-Auslieferungssitzung ist oder nicht;
wobei in dem Fall, dass die Manifestanforderung die allererste in der Livevideoinhalt-Auslieferungssitzung ist, das Verfahren Folgendes umfasst:
- Umschreiben (S206) des Originalmanifests durch Modifizierung eines Deskriptors wenigstens eines Chunks, um wenigstens einen zusätzlichen Anfang einer unabhängigen Bildergruppe einzufügen;
- Senden (S208) des umgeschriebenen Manifests an das Clientgerät als Reaktion auf die empfangene Manifestanforderung;
wobei in dem Fall, dass die Manifestanforderung nicht die allererste in der Livevideoinhalt-Auslieferungssitzung ist, das Verfahren Folgendes umfasst:
- Bestimmen (S210), ob wenigstens ein zuvor modifizierter Deskriptor im angeforderten Manifest vorhanden sein muss oder nicht, je nachdem, ob das Originalmanifest wenigstens einen Chunk aufführt, der einer Transcodierung im Hinblick auf das umgeschriebene Manifest bedarf, das als Reaktion auf die allererste Manifestanforderung der Livevideoinhalt-Auslieferungssitzung gesendet wurde;
- in dem Fall, dass wenigstens ein zuvor modifizierter Deskriptor beschrieben werden muss, Verändern (S212) des Originalmanifests mit dem wenigstens einen zuvor modifizierten Deskriptor durch Ersetzen der Beschreibung des wenigstens einen Chunks, der einer Transcodierung bedarf, im Originalmanifest durch die Beschreibung des wenigstens einen Chunks, der einer Transcodierung bedarf, der in das umgeschriebene Manifest eingesetzt wurde, das als Reaktion auf die allererste Manifestanforderung der Livevideoinhalt-Auslieferungssitzung gesendet wurde, und Senden (S214) des veränderten Originalmanifests als Reaktion auf die empfangene Manifestanforderung; und
- anderenfalls Senden (S216) des Originalmanifests als Reaktion auf die empfangene Manifestanforderung.

11. Inhaltauslieferungsnetzwerk CDN, das einen Zwischenspeicher-Server nach Anspruch 10 umfasst.

## Revendications

1. Procédé de distribution d'un contenu vidéo en direct à l'aide d'une diffusion adaptative depuis un serveur cache (130) vers un dispositif client (140) pendant une session de distribution de contenu vidéo en direct, le contenu vidéo en direct étant divisé en segments, les segments étant en outre divisés en blocs, le procédé étant mis en œuvre par le serveur cache (130), le procédé comprenant :
- la réception (S200) depuis le dispositif client (140) d'une demande de manifeste qui demande un manifeste du contenu vidéo en direct, appelé manifeste original, et l'obtention (S202) dudit manifeste original ;
- la détermination (S204) quant à savoir si ladite demande de manifeste est ou non la toute première demande de manifeste dans ladite session de distribution de contenu vidéo en direct ;
dans le cas où ladite demande de manifeste est la toute première dans ladite session de distribution de contenu vidéo en direct, le procédé comprenant :
- la réécriture (S206) dudit manifeste original en modifiant un descripteur d'au moins un bloc afin d'insérer au moins un début supplémentaire de groupe indépendant d'images ;
- la transmission (S208) du manifeste réécrit au dispositif client en réponse à la demande de manifeste reçue ;
dans le cas où ladite demande de manifeste n'est pas la toute première dans ladite session de distribution de contenu vidéo en direct, le procédé comprenant :
- la détermination (S210) quant à savoir si au moins un descripteur précédemment modifié doit être présent dans le manifeste demandé, selon que le manifeste original répertorie ou non au moins un bloc nécessitant un transcodage, compte tenu du manifeste réécrit transmis en réponse à la toute première demande de manifeste de la session de distribution de contenu vidéo en direct ;
- dans le cas où au moins un descripteur précédemment modifié doit être décrit, la modification (S212) du manifeste original avec ledit au moins un descripteur précédemment modifié en remplaçant la description dudit au moins un bloc qui nécessite un transcodage dans le manifeste original par la description dudit au moins un bloc qui nécessite un transcodage qui a été insérée dans le manifeste réécrit transmis en réponse à la toute première demande de manifeste de la session de distribution de contenu vidéo en direct, et la transmission (S214) dudit manifeste original modifié en réponse à la demande de manifeste reçue ; et
- sinon, la transmission (S216) du manifeste original en réponse à la demande de manifeste reçue.

2. Procédé selon la revendication 1, dans lequel la modification du descripteur d'au moins un bloc lors de la réécriture (S206) dudit manifeste d'origine comprend :
- l'identification (S304) d'un point de jonction susceptible d'être utilisé ultérieurement par le dispositif client (140) pour commencer la lecture du contenu vidéo en direct ;
- la réécriture (S310) dudit manifeste original de manière à insérer undit début supplémentaire de groupe indépendant d'images au niveau dudit point de jonction identifié.

3. Procédé selon la revendication 2, dans lequel le point de jonction susceptible d'être utilisé ultérieurement par le dispositif client (140) pour commencer la lecture du contenu vidéo en direct est défini en tant que décalage prédéfini vers l'arrière à partir de la fin de la liste des blocs dans le manifeste d'origine.

4. Procédé selon la revendication 2 ou 3, comprenant :
- la vérification de la présence ou non d'un début de groupe indépendant d'images au niveau du point de jonction identifié ;
- dans le cas où un début de groupe indépendant d'images est présent au niveau du point de jonction identifié, la transmission (S308) du manifeste original en réponse à la demande de manifeste reçue ;
- dans le cas où un début de groupe indépendant d'images n'est pas présent au niveau du point de jonction identifié, la réécriture (S310) dudit manifeste original de manière à insérer au moins un début supplémentaire de groupe indépendant d'images au niveau dudit point de jonction ; et
- la transmission (S312) du manifeste réécrit au dispositif client en réponse à la demande de manifeste reçue.

5. Procédé selon l'une quelconque des revendications 1 à 4, le procédé comprenant en outre, lors de la réception (S402) d'une demande de bloc qui demande un bloc décrit dans ledit manifeste réécrit ou ledit manifeste original modifié :
- le fait d'ordonner (S410) à un transcodeur (160) de réaliser un transcodage afin d'obtenir ledit bloc demandé en décodant des blocs sous leur forme originale, en codant à nouveau les blocs décodés en insérant l'au moins un début supplémentaire de groupe indépendant d'images et en extrayant le bloc demandé décrit dans la demande de bloc reçue ;
- la réception (S412) du bloc demandé depuis le transcodeur (160) ; et
- la transmission (S414) dudit bloc demandé au dispositif client (140).

6. Procédé selon la revendication 5, dans lequel les blocs étant indexés par plage d'octets dans le manifeste réécrit, le procédé comprenant en outre le remplissage par des zéros du bloc demandé reçu depuis le transcodeur pour conserver la plage d'octets inchangée avant et après le transcodage et la compression du bloc rempli par des zéros à l'aide d'un codage entropique.

7. Procédé selon l'une quelconque des revendications 1 à 6, dans lequel ladite diffusion adaptative est conforme au protocole LL-DASH ou LL-HLS.

8. Produit-programme informatique comprenant des instructions provoquant la mise en œuvre du procédé selon l'une quelconque des revendications 1 à 7, lorsque les instructions sont exécutées par un processeur.

9. Support de stockage stockant des instructions provoquant la mise en œuvre du procédé selon l'une quelconque des revendications 1 à 7, lorsque les instructions sont lues à partir du support de stockage et exécutées par un processeur.

10. Serveur cache configuré pour distribuer un contenu vidéo en direct à l'aide d'une diffusion adaptative vers un dispositif client pendant une session de distribution de contenu vidéo en direct, le contenu vidéo en direct étant segmenté en segments, les segments étant en outre divisés en blocs, le serveur cache comprenant des circuits électroniques configurés pour mettre en œuvre :
- la réception (S200) depuis le dispositif client (140) d'une demande de manifeste qui demande un manifeste du contenu vidéo en direct, appelé manifeste original, et l'obtention (S202) dudit manifeste original ;
- la détermination (S204) quant à savoir si ladite demande de manifeste est ou non la toute première demande de manifeste dans ladite session de distribution de contenu vidéo en direct ;
dans le cas où ladite demande de manifeste est la toute première dans ladite session de distribution de contenu vidéo en direct, le procédé comprenant :
- la réécriture (S206) dudit manifeste original en modifiant un descripteur d'au moins un bloc afin d'insérer au moins un début supplémentaire de groupe indépendant d'images ;
- la transmission (S208) du manifeste réécrit au dispositif client en réponse à la demande de manifeste reçue ;
dans le cas où ladite demande de manifeste n'est pas la toute première dans ladite session de distribution de contenu vidéo en direct, le procédé comprenant :
- la détermination (S210) quant à savoir si au moins un descripteur précédemment modifié doit être présent dans le manifeste demandé, selon que le manifeste original répertorie ou non au moins un bloc nécessitant un transcodage, compte tenu du manifeste réécrit transmis en réponse à la toute première demande de manifeste de la session de distribution de contenu vidéo en direct ;
- dans le cas où au moins un descripteur précédemment modifié doit être décrit, la modification (S212) du manifeste original avec ledit au moins un descripteur précédemment modifié en remplaçant la description dudit au moins un bloc qui nécessite un transcodage dans le manifeste original par la description dudit au moins un bloc qui nécessite un transcodage qui a été insérée dans le manifeste réécrit transmis en réponse à la toute première demande de manifeste de la session de distribution de contenu vidéo en direct, et la transmission (S214) dudit manifeste original modifié en réponse à la demande de manifeste reçue ; et
- sinon, la transmission (S216) du manifeste original en réponse à la demande de manifeste reçue.

11. Réseau de diffusion de contenu, RDC, comprenant un serveur cache selon la revendication 10.
